# EUROPEAN PATENT APPLICATION

(11) **EP 4 481 314 A1**
(43) Date of publication of application: **25.12.2024**
(21) Application number: 24181217.1
(22) Date of filing: 10.06.2024
(51) Int. Cl.: F28F 7/02, B33Y 80/00, F28D 7/10

(54) **COMPOSITE HEAT EXCHANGE APPARATUS FOR A TURBINE ENGINE**

(30) Priority: 08.06.2023 US 202318207527
(71) Applicant: RTX Corporation, Farmington, CT 06032 (US)
(72) Inventor: McCAFFREY, Michael G., Windsor, 06095 (US)
(74) Representative: Dehns

(57) **Abstract**

An assembly (20) is provided for an engine. This engine assembly (20) includes a heat exchange apparatus (22), and the heat exchange apparatus (22) includes a core (28), a shell (30) and an inner flowpath (32). The core (28) includes a core sidewall (34) and a plurality of internal passages (36). The core sidewall (34) extends axially along and circumferentially around an axis (38). The core sidewall (34) extends radially from a core inner side (40) to a core outer side (42). The core inner side (40) forms an outer peripheral boundary of the inner flowpath (32). The internal passages (36) are arranged circumferentially about the axis (38). Each of the internal passages (36) extends axially in the core sidewall (34). The shell (30) extends axially along and circumscribes the core (28). The shell (30) is abutted radially against the core outer side (42).

## Description

### TECHNICAL FIELD

This disclosure relates generally to a turbine engine and, more particularly, to a heat exchanger for the turbine engine.

### BACKGROUND OF THE DISCLOSURE

A gas turbine engine may include multiple heat exchangers for exchanging heat energy between working fluids. Various types and configurations of heat exchangers are known in the art. While these known heat exchangers have various benefits, there is still room in the art for improvement.

### SUMMARY OF THE DISCLOSURE

According to an aspect of the present invention, an assembly is provided for an engine. This engine assembly includes a heat exchange apparatus, and the heat exchange apparatus includes a core, a shell and an inner flowpath. The core includes a core sidewall and a plurality of internal passages. The core sidewall extends axially along and circumferentially around an axis. The core sidewall extends radially from a core inner side to a core outer side. The core inner side forms an outer peripheral boundary of the inner flowpath. The internal passages are arranged circumferentially about the axis. Each of the internal passages extends axially in the core sidewall. The shell extends axially along and circumscribes the core. The shell is abutted radially against the core outer side.

According to another aspect of the present invention, another assembly is provided for an engine. This engine assembly includes a heat exchange apparatus, and the heat exchange apparatus includes a core, a shell and an inner flowpath. The core includes a core sidewall and a plurality of internal passages. The core sidewall extends axially along and circumferentially around an axis. The core sidewall has a radial core sidewall thickness extending radially from a core inner side to a core outer side. The core inner side forms an outer peripheral boundary of the inner flowpath. The internal passages are embedded within the core sidewall. The shell axially overlaps and is wrapped circumferentially around the core. The shell radially contacts the core outer side. The inner flowpath has an inner flowpath radius that is at least ten times greater than the radial core sidewall thickness.

According to still another aspect of the present invention, another assembly is provided for an engine. This engine assembly includes a combustor, and the combustor includes a combustor wall and a combustion chamber. The combustor wall includes a core and a shell. The core includes a core sidewall and a plurality of internal passages. The core sidewall extends axially along and circumferentially around an axis. The core sidewall extends radially from a core inner side to a core outer side. The core inner side forms an outer peripheral boundary of the combustion chamber. The internal passages are embedded within the core sidewall. The shell axially overlaps and is wrapped circumferentially around the core. The shell radially contacts the core outer side.

In an embodiment of the above, the core may have a first microstructure. The shell may have a second microstructure that is different than the first microstructure.

In an embodiment according to any of the previous embodiments, the core may be formed using an additive manufacturing process providing the core with the first microstructure. The shell may be formed using a forging process providing the shell with the second microstructure.

In an embodiment according to any of the previous embodiments, the core may be configured to transfer heat energy between a first fluid flowing in the inner flowpath and a second fluid flowing in the internal passages.

In an embodiment according to any of the previous embodiments, the assembly may also include a compressor section fluidly coupled with and upstream of the inner flowpath.

In an embodiment according to any of the previous embodiments, the assembly may also include a fuel source fluidly coupled with and upstream of the internal passages.

In an embodiment according to any of the previous embodiments, the assembly may also include a second fluid source fluidly coupled with and upstream of the internal passages. The second fluid source may be configured to contain a quantity of the second fluid as a liquid.

In an embodiment according to any of the previous embodiments, the inner flowpath may be fluidly discrete from the internal passages.

In an embodiment according to any of the previous embodiments, the assembly may also include a combustor which includes the heat exchange apparatus. The inner flowpath may be configured as a combustion chamber within the combustor.

In an embodiment according to any of the previous embodiments, the internal passages may include a first passage and a second passage. The first passage may be circumferentially adjacent and radially aligned with the second passage.

In an embodiment according to any of the previous embodiments, the internal passages may include a first passage and a second passage. The first passage may be radially adjacent and circumferentially aligned with the second passage.

In an embodiment according to any of the previous embodiments, the internal passages may include a first passage, a second passage and a third passage. The first passage may be circumferentially adjacent and radially aligned with the second passage. The third passage may be radially offset from the first passage and the second passage. The third passage may be circumferentially aligned with a wall between the first passage and the second passage.

In an embodiment according to any of the previous embodiments, the internal passages may include a first passage and a second passage. The first passage and the second passage may be fluidly coupled in parallel between an inlet into the heat exchange apparatus and an outlet from the heat exchange apparatus.

In an embodiment according to any of the previous embodiments, the internal passages may include a first passage and a second passage. The first passage and the second passage may be fluidly coupled in series between an inlet into the heat exchange apparatus and an outlet from the heat exchange apparatus.

In an embodiment according to any of the previous embodiments, the internal passages may include a first passage. The first passage may have an elongated cross-sectional geometry when viewed in a reference plane perpendicular to the axis.

In an embodiment according to any of the previous embodiments, the internal passages may include a first passage. The first passage may have a triangular cross-sectional geometry when viewed in a reference plane perpendicular to the axis.

In an embodiment according to any of the previous embodiments, the internal passages may include a first passage and a second passage. The core may include an uninterrupted, straight-line load path radially from the core inner side to the core outer side. The uninterrupted, straight-line load path may be axially aligned with and circumferentially between the first passage and the second passage.

In an embodiment according to any of the previous embodiments, the core inner side may have a radius that is at least ten times greater than a radial thickness of the core sidewall.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial side sectional schematic illustration of an assembly for an engine.
FIG. 2 is a cross-sectional schematic illustration of the engine assembly.
FIG. 3 is a partial cross-sectional illustration of a heat exchanger apparatus.
FIG. 4 is a partial cross-sectional illustration of the heat exchange apparatus with another internal passage arrangement.
FIGS. 5A and 5B are partial side sectional schematic illustrations of the engine assembly with alternative heat exchanger core flowthrough arrangements.
FIG. 6 is a partial cross-sectional sectional illustration of the heat exchange apparatus with another internal passage arrangement.
FIG. 7 is a side cutaway illustration of a gas turbine engine.

### DETAILED DESCRIPTION

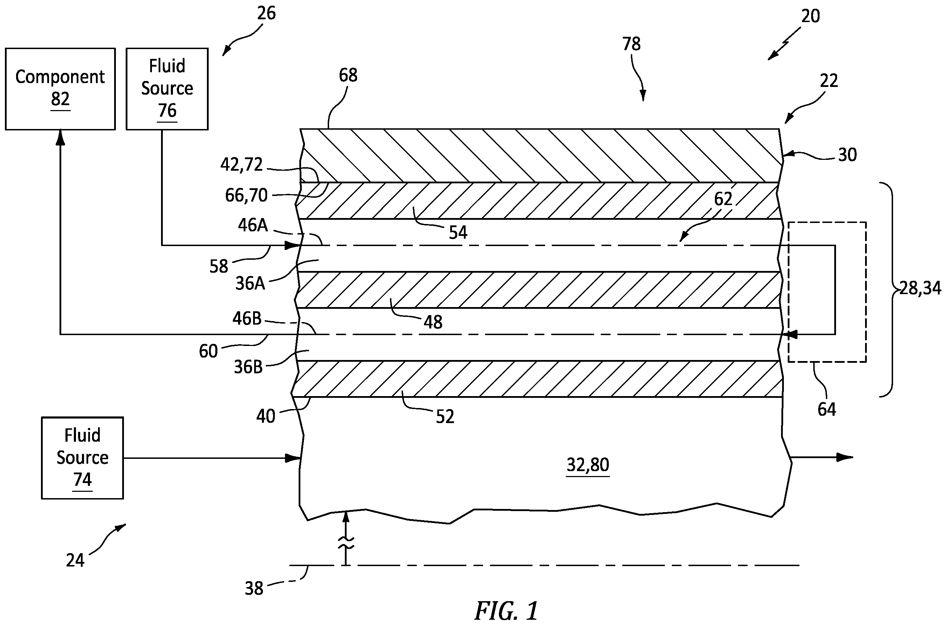

FIG. 1 illustrates an assembly 20 for an engine such as a turbine engine. This engine may be configured as, or may otherwise be included as part of, a propulsion system for an aircraft. The engine, for example, may be a turbofan engine, a turbojet engine, a turboprop engine, a pusher fan engine, a propfan engine, a rotating detonation engine, a scramjet engine or a pulsejet engine. The engine may also or alternatively be configured as, or may otherwise be included as part of, an electric power generator for the aircraft. The engine, for example, may be an auxiliary power unit (APU) engine. The aircraft may be an airplane, a helicopter, a drone (e.g., an unmanned aerial vehicle (UAV)) or any other manned or unmanned aerial vehicle or system. The present disclosure, however, is not limited to the foregoing exemplary engine types nor to aircraft applications in general.

The engine assembly 20 of FIG. 1 includes a composite heat exchange apparatus 22, a first fluid circuit 24 and a second fluid circuit 26. The heat exchange apparatus 22 is configured as a heat exchanger for transferring heat energy between a first fluid flowing in the first fluid circuit 24 and a second fluid flowing in the second fluid circuit 26. The heat exchange apparatus 22 of FIG. 1 includes a heat exchange core 28 (HX core), an outer shell 30 (e.g., a sleeve) and an inner flowpath 32; e.g., an inner bore.

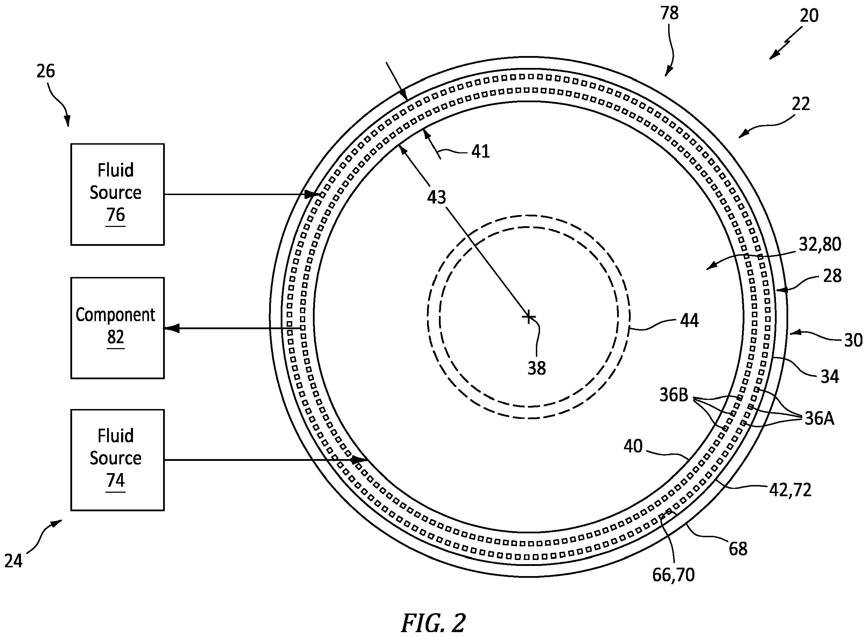

The HX core 28 includes a tubular core sidewall 34 and one or more sets of internal passages 36A and 36B (generally referred to as "36"). The HX core 28 and its core sidewall 34 extend axially along an axis 38 between and to a first end of the HX core 28 and a second end of the HX core 28. Briefly, the axis 38 may be a centerline axis of the heat exchange apparatus 22 and/or one or more of its members 28 and 30. The axis 38 may also or alternatively be a rotational axis of one or more components (e.g., rotors, rotating assemblies, etc.) in the turbine engine. The HX core 28 and its core sidewall 34 extend radially from a radial inner side 40 of the HX core 28 to a radial outer side 42 of the HX core 28. Referring to FIG. 2, the HX core 28 and its core sidewall 34 extend circumferentially around the axis 38. The HX core 28 of FIG. 2 and its core sidewall 34 thereby have a full-hoop (e.g., tubular) geometry.

The core inner side 40 forms an outer peripheral boundary of the inner flowpath 32 within the HX core 28 and its core sidewall 34. This inner flowpath 32 may project (e.g., uninterrupted) out from the axis 38 to the core sidewall 34 at the core inner side 40. Referring to FIG. 1, the inner flowpath 32 extends axially along the axis 38 in through the HX core 28. This inner flowpath 32 also extends axially along the axis 38 into, within or through the heat exchange apparatus 22. The inner flowpath 32 may thereby have an axially extending solid cylindrical or otherwise non-annular geometry. Alternatively, referring to FIG. 2, the inner flowpath 32 may be annular and extend radially between another inner component 44 (e.g., an inner sidewall) and the core sidewall 34.

The core sidewall 34 of FIG. 2 has a radial thickness 41 extending radially from the core inner side 40 to the core outer side 42. The inner flowpath 32 has an outer radius 43 extending radially from the axis 38 to the core inner side 40. This inner flowpath radius may be at least five times (5x), ten times (10x) or fifteen times (15x) the core sidewall thickness 41. The present disclosure, however, is not limited to the foregoing exemplary dimensional relationship.

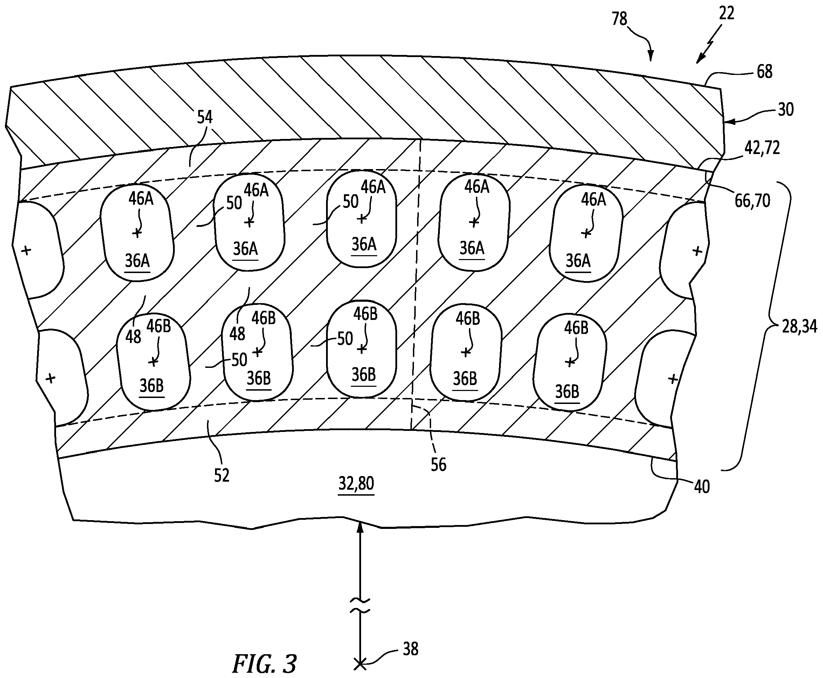

Referring to FIG. 3, the internal passages 36A, 36B in each passage set may be arranged circumferentially about the axis 38 in a respective annular array; e.g., a circular array. The array of the inner passages 36B (the inner passage array) is disposed towards the core inner side 40. The array of the outer passages 36A (the outer passage array) is disposed towards the core outer side 42. The outer passage array and its outer passages 36A of FIG. 3 are thereby radially outboard of (and the outer passage array circumscribes) the inner passage array and its inner passages 36B. There may be a one-to-one (1:1) ratio between a (e.g., total) number of the inner passages 36B and a (e.g., total) number of the outer passages 36A included in the HX core 28. Each of the inner passages 36B may be circumferentially aligned with a respective one of the outer passages 36A. For example, a longitudinal centerline 46B of each inner passage 36B and a longitudinal centerline 46A of the respective outer passage 36A may lie along a common (e.g., straight-line) ray projecting radially out from the axis 38.

Each internal passage 36A, 36B extends laterally (e.g., circumferentially or tangentially) within the HX core 28 and its core sidewall 34 between opposing lateral sides of the respective internal passage 36. Each internal passage 36A, 36B extends radially within the HX core 28 and its core sidewall 34 between opposing radial sides of the respective internal passage 36. Referring to FIG. 1, each internal passage 36A, 36B extends longitudinally along its respective passage centerline 46A, 46B (e.g., axially along the axis 38 in FIG. 1) in the HX core 28 and its core sidewall 34. More particularly, each internal passage 36A, 36B may extend longitudinally / axially within, into or through the HX core 28 and its core sidewall 34. Each passage centerline 46A, 46B (generally referred to as "46") may follow an axial trajectory within the core sidewall 34; e.g., without a radial and/or circumferential component. It is contemplated, however, the passage centerline 46A, 46B of one or more of the internal passages 36A, 36B may alternatively follow a trajectory also with a radial (e.g., inward and/or outward) component and/or a circumferential (e.g., clockwise and/or counter-clockwise) component. For example, one or more of the internal passages 36A, 36B may each spiral about the axis 38 and the inner flowpath 32 as that internal passage 36A, 36B extends longitudinally along its passage centerline 46A, 46B.

The internal passages 36 may be configured as microcircuit passages. The internal passages 36 of FIGS. 1 and 3, for example, are embedded within / extend in material forming the HX core 28 and its core sidewall 34. This core material of FIG. 3 provides the core sidewall 34 with an internal lattice of lateral core walls 48 and radial core walls 50 between a tubular inner core wall 52 and a tubular outer core wall 54. Each lateral core wall 48 is disposed radially between and extends laterally along a radially neighboring (e.g., adjacent) pair of the internal passages 36. Each radial core wall 50 is disposed laterally between and extends radially along a laterally neighboring (e.g., adjacent) pair of the internal passages 36. Adjacent core walls 48 and 50 may meet at a respective intersection; e.g., a node. With this arrangement, the core material and its core walls 48, 50, 52 and 54 may provide the core sidewall 34 with one or more uninterrupted (e.g., straight-line) load paths 56. Each of these load paths 56 may extend radially through the core sidewall 34 from the inner core wall 52 at the core inner side 40 to the outer core wall 54 at the core outer side 42.

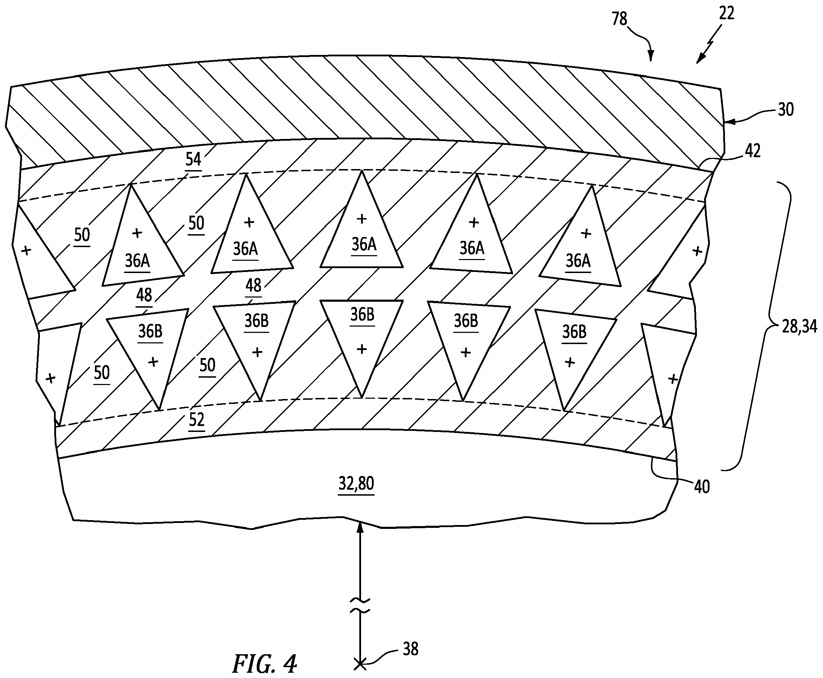

Each internal passage 36 has a cross-sectional geometry when viewed, for example, in a reference plane perpendicular to the axis 38. This passage cross-sectional geometry may be a (e.g., radially) elongated cross-sectional geometry. Each passage cross-sectional geometry of FIG. 3, for example, has an oval, elliptical or otherwise rounded elongated shape (e.g., a race-track shape). The present disclosure, however, is not limited to such an exemplary passage geometries. For example, referring to FIG. 4, passage cross-sectional geometry may alternatively have a (e.g., generally) polygonal shape. Each passage cross-sectional geometry of FIG. 4, for example, has a triangular or otherwise laterally tapering shape. Here, the cross-sectional geometry of each inner passage 36B laterally tapers as the respective inner passage 36B extends radially inwards. The cross-sectional geometry of each outer passage 36A laterally tapers as the respective outer passage 36A extends radially outwards. The cross-sectional geometries of the outer passages 36A may (e.g., substantially or completely) mirror the cross-sectional geometries of the inner passages 36B.

Each internal passage 36 of FIGS. 1 and 3 may be configured as a discrete passage along at least a portion (e.g., more than seventy, eighty or ninety percent) or an entirety of its longitudinal length. The core walls 48 and 50 of FIG. 3, for example, may fluidly separate the internal passages 36 from one another as those internal passages 36 extend longitudinally (e.g., axially) in the core sidewall 34. It is contemplated, however, some or all of the inner passages 36B may alternatively be fluidly interconnected at one or more locations along their longitudinal lengths. It is also or alternatively contemplated some or all of the outer passages 36A may alternatively be fluidly interconnected at one or more locations along their longitudinal lengths.

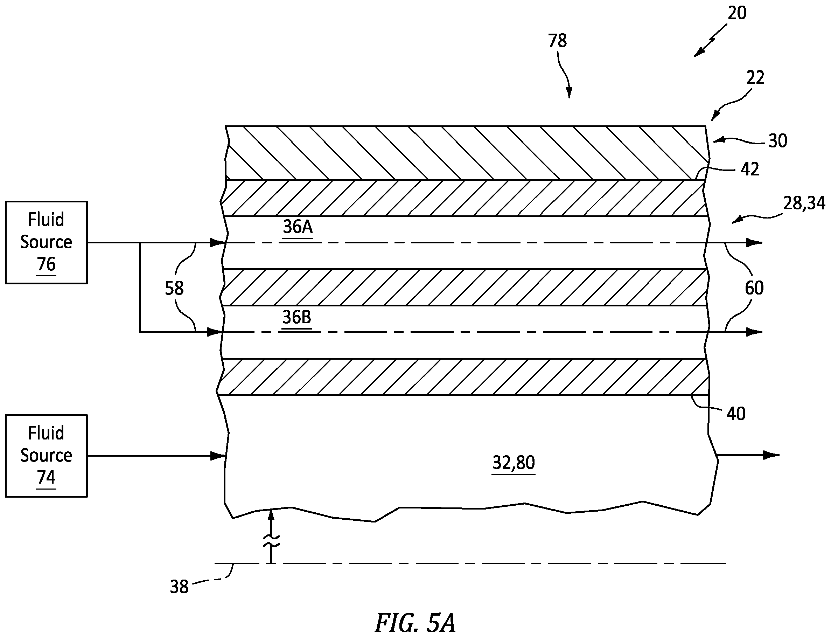

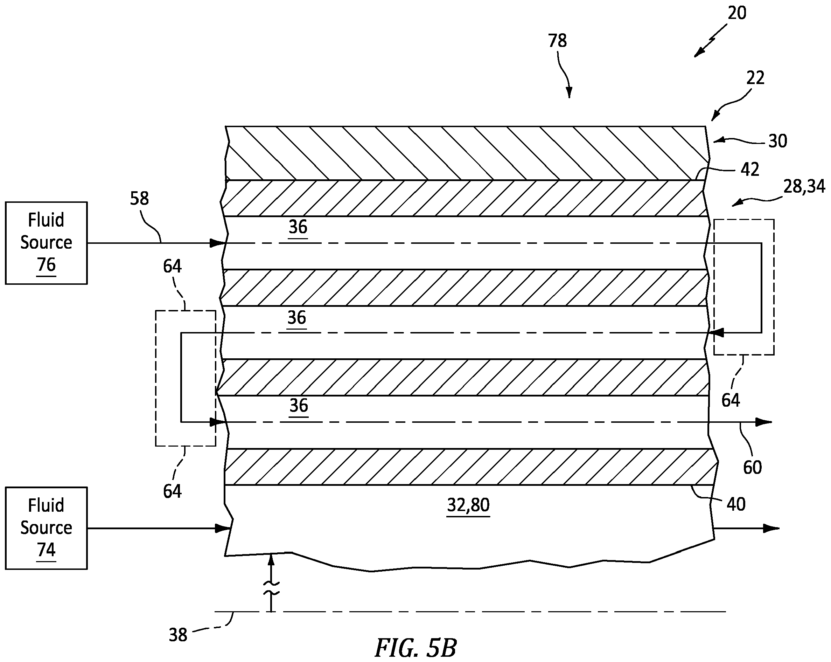

Referring to FIG. 1, each of the outer passages 36A may be fluidly coupled with a respective one of the inner passages 36B (e.g., the neighboring inner passage 36B directly radially below the outer passage 36A) in series between an inlet 58 (e.g., an inlet manifold, an inlet conduit, etc.) into the heat exchange apparatus 22 and its HX core 28 and an outlet 60 (e.g., an outlet manifold, an outlet conduit, etc.) from the heat exchange apparatus 22 and its HX core 28. Each pair of the internal passages 36 may thereby form a single tortuous (e.g., multi-pass, overlapping, zigzag, U-shaped, etc.) core passage 62 in the core sidewall 34. These core passages 62 may be fluidly coupled in parallel between the core inlet 58 and the core outlet 60. The outer passages 36A may therefore be fluidly coupled in parallel between the core inlet 58 and the core outlet 60. Similarly, the inner passages 36B may be fluidly coupled in parallel between the core inlet 58 and the core outlet 60. The present disclosure, however, is not limited to such an exemplary internal passage arrangement. For example, an intermediate manifold 64 may be arranged between some or all of the outer passages 36A and some or all of the inner passages 36B. Moreover, while the HX core 28 of FIG. 1 is configured as a two-pass heat exchange element, the HX core 28 may alternatively be configured as a single-pass heat exchange element (e.g., see FIG. 5A) or a three or more pass heat exchange element (e.g., see FIG. 5B).

The core material forming the HX core 28 and its core sidewall 34 has a core microstructure. This core microstructure may be heterogeneous microstructure. The core microstructure, for example, may include one or more inclusions, one or more internal voids, one or more regions of different porosities and/or one or more material flaws. The core microstructure may be imparted during the formation of the HX core 28 and its core sidewall 34. The HX core 28 and its core sidewall 34, for example, may be formed as a monolithic body using an additive manufacturing process. Examples of this additive manufacturing process include, but are not limited to, a stereolithography (SLA) process, a direct selective laser sintering (DSLS) process, an electron beam sintering (EBS) process, an electron beam melting (EBM) process, a laser engineered net shaping (LENS) process, a laser net shape manufacturing (LNSM) process, a direct metal deposition (DMD) process, a direct metal laser sintering (DMLS) process or any other type of additive manufacturing process. During such additive manufacturing processes, some of the feed material may thermally warp, be partially sintered, etc. and thereby provide the core material with internal variations. The present disclosure, however, is not limited to forming the HX core 28 using additive manufacturing processes. The HX core 28, for example, may also or alternatively be formed using a casting process.

The outer shell 30 of FIG. 1 extends axially along the axis 38 between and to a first end of the outer shell 30 and a second end of the outer shell 30. The outer shell 30 extends radially from a radial inner side 66 of the outer shell 30 and a radial outer side 68 of the outer shell 30. Referring to FIG. 2, the outer shell 30 extends circumferentially around the axis 38. The outer shell 30 of FIG. 2 thereby has a full-hoop (e.g., tubular) geometry.

The material forming the outer shell 30 may be the same as or different than the core material. Both the shell material and the core material, for example, may be a metal material. This metal material may be or include (e.g., be an alloy of): iron (Fe), nickel (Ni), aluminum (Al), titanium (Ti), Cobalt (Co), Copper (Cu) , etc. Where the shell material and the core material are different materials, these different materials may be selected to have similar coefficients of thermal expansion and/or other material parameters. The present disclosure, however, is not limited to the foregoing exemplary shell and core materials.

The core material forming the outer shell 30 has a shell microstructure. This shell microstructure may be a homogenous microstructure. The shell microstructure, for example, may be substantially devoid of inclusions, internal voids, regions of different porosities and/or other material flaws. The shell microstructure may be imparted during the formation of the outer shell 30. The outer shell 30, for example, may be formed using a forging process and/or a machining process. Typically, such formation processes provide a more structurally robust body than, for example, a typical additive manufacturing process and/or a typical casting process.

The outer shell 30 is configured as a support sleeve around at least a portion or an entirety of the HX core 28. The HX core 28 of FIGS. 1 and 2, for example, is disposed within a bore of the outer shell 30. The outer shell 30 of FIG. 1 extends axially along and thereby axially overlaps at least a portion or the entirety of the HX core 28. The outer shell 30 of FIG. 2 extends circumferentially around (e.g., circumscribes, wraps around) the HX core 28. The outer shell 30 of FIGS. 1 and 2 also radially engages the HX core 28 and its core sidewall 34. A (e.g., cylindrical) surface 70 of the outer shell 30 at its shell inner side 66, for example, is abutted radially against and radially contacts a (e.g., cylindrical) surface 72 of the HX core 28 at its core outer side 42. The HX core 28 is also fixedly attached to the outer shell 30. The HX core 28, for example, may be press-fit within the outer shell 30. The HX core 28 may also or alternatively be bonded to (e.g., welded, brazed, etc.), mechanically fastened and/or otherwise connected to the outer shell 30. With this engagement (e.g., full contact) between the surfaces 70 and 72, the outer shell 30 provides a full-hoop support circumferentially around and axially along the HX core 28. The HX core 28 and its core sidewall 34 may thereby be subject to relatively high pressure loads and/or thermal loads which may otherwise exceed working limits of the HX core 28 if not supported with the outer shell 30. The heat exchange apparatus 22, for example, may take advantage of material properties of the (e.g., forged) outer shell 30 to reinforce the (e.g., additive manufactured) HX core 28.

Referring to FIG. 1, the first fluid circuit 24 includes the inner flowpath 32 and a first fluid source 74. The first fluid source 74 is fluidly coupled with and upstream of the inner flowpath 32. The first fluid source 74 of FIG. 1, for example, is fluidly coupled with an inlet into the inner flowpath 32. The inner flowpath 32 is configured to direct the first fluid (e.g., a liquid, a gas or a liquid-gas mixture) received from the first fluid source 74 through the heat exchange apparatus 22.

The second fluid circuit 26 includes a circuit flowpath through the HX core 28 and its core sidewall 34. The second fluid circuit 26 also includes a second fluid source 76. The circuit flowpath of FIG. 1 includes the internal passages 36. The second fluid source 76 is fluidly coupled with and upstream of the circuit flowpath and its internal passages 36. The second fluid source 76 of FIG. 1, for example, is fluidly coupled with the core inlet 58. The circuit flowpath and its internal passages 36 are configured to direct the second fluid (e.g., a liquid, a gas or a liquid-gas mixture) received from the second fluid source 76 through the HX core 28 and its core sidewall 34.

As the first fluid flows within the inner flowpath 32 and as the second fluid flows within the circuit flowpath and its internal passages 36, the core material provides a heat exchange path between the first fluid and the second fluid. The HX core 28 and its core material may thereby facilitate heat energy transfer between the first fluid and the second fluid where those fluids have different temperatures when entering the heat exchange apparatus 22. For example, where the first fluid enters the heat exchange apparatus 22 with a higher temperature than that of the second fluid entering the heat exchange apparatus 22, the HX core 28 may transfer the heat energy from the first fluid to the second fluid. The heat exchange apparatus 22 may thereby cool the first fluid and/or the HX core 28 and its core sidewall 34. The heat exchange apparatus 22 may also heat the second fluid.

In some embodiments, the heat exchange apparatus 22 may be configured as, or included as part of, a (e.g., an annular or CAN-type) combustor 78 within the turbine engine. The heat exchange apparatus 22 of FIG. 1, for example, may at least partially or completely form a (e.g., outer, or inner) tubular sidewall of the combustor 78. With this arrangement, the inner flowpath 32 may be configured as a combustion chamber 80 within the combustor 78. The first fluid source 74 may be a compressor section of the turbine engine which directs compressed air into the combustion chamber 80 for mixing with fuel and combustion. Here, the first fluid may be the compressed air, a mixture of the compressed air and the fuel, and/or combustion products generated from the combustion of the fuel-air mixture.

In some embodiments, the second fluid source 76 may be a fluid reservoir (e.g., a tank, a container, a bladder, etc.) which contains a quantity of the second fluid. Examples of this second fluid include, but are not limited to, fuel, lubricant (e.g., engine oil) and coolant. With such an arrangement, the second fluid may be provided to at least one downstream engine component 82. Examples of the engine component 82 include, but are not limited to, a fluid injector, another heat exchanger, a pump, a valve, a filter, an actuator, a bearing, a geartrain and the like.

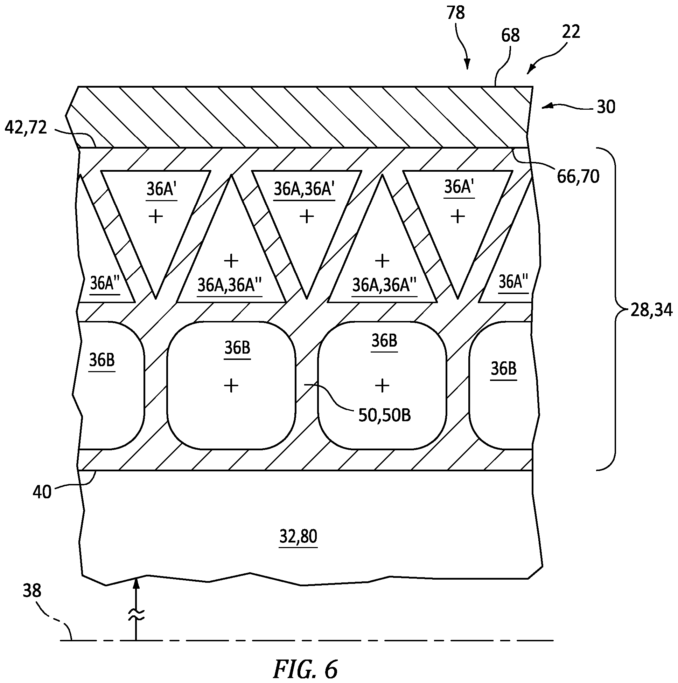

In some embodiments, referring to FIG. 3, there may be a one-to-one (1:1) ratio between the number of the inner passages 36B and the number of the outer passages 36A included in the HX core 28. In other embodiments, referring to FIG. 6, the number of the inner passages 36B and the number of the outer passages 36A included in the HX core 28 may be different. The HX core 28 of FIG. 6, for example, includes more of the outer passages 36A than the inner passages 36B. With such an arrangement, each radial core wall 50 (e.g., 50B) may be laterally aligned with a respective one of the outer passages 36A (e.g., 36A'). Here, the outer passages 36A' which are laterally offset from the inner passages 36B may have a different configuration than the outer passages 36A (e.g., 36A") which are laterally aligned with the inner passages 36B. The present disclosure, however, is not limited to such an exemplary arrangement.

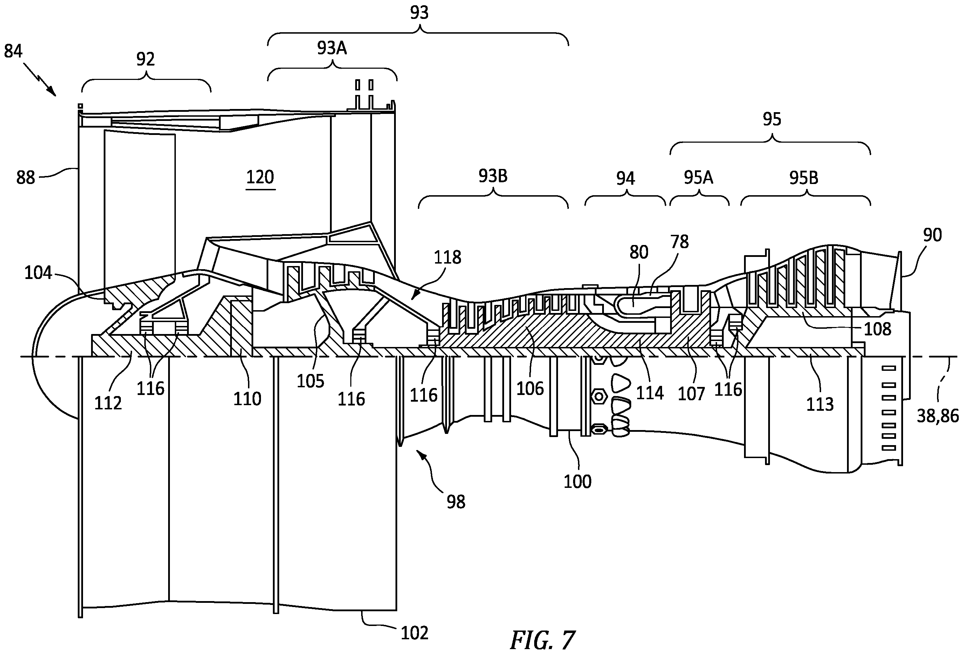

FIG. 7 illustrates an example of the turbine engine with which the engine assembly 20 of FIG. 1 may be included. Here, the turbine engine is configured as a geared turbofan gas turbine engine 84. This turbine engine 84 extends axially along an axial centerline 86 of the turbine engine 84 from an upstream airflow inlet 88 into the turbine engine 84 to a downstream combustion products exhaust 90 from the turbine engine 84, which axial centerline 86 may be parallel (e.g., coaxial) with the axis 38. The turbine engine 84 includes a fan section 92, a compressor section 93, a combustor section 94 and a turbine section 95. The compressor section 93 includes a low pressure compressor (LPC) section 93A and a high pressure compressor (HPC) section 93B. The turbine section 95 includes a high pressure turbine (HPT) section 95A and a low pressure turbine (LPT) section 95B.

The engine sections 92-95B are arranged sequentially along the axial centerline 86 within an engine housing 98. This engine housing 98 includes an inner case 100 (e.g., a core case) and an outer case 102 (e.g., a fan case). The inner case 100 may house one or more of the engine sections 93A, 93B, 94, 95A and 95B; e.g., a core of the turbine engine 84. The outer case 102 may house at least the fan section 92.

Each of the engine sections 92, 93A, 93B, 95A and 95B includes a respective bladed rotor 104-108. Each of these bladed rotors 104-108 includes a plurality of rotor blades arranged circumferentially around and connected to one or more respective rotor disks and/or hubs. The rotor blades, for example, may be formed integral with or mechanically fastened, welded, brazed and/or otherwise attached to the respective rotor disk(s) and/or hub(s).

The fan rotor 104 is connected to a geartrain 110, for example, through a fan shaft 112. The geartrain 110 and the LPC rotor 105 are connected to and driven by the LPT rotor 108 through a low speed shaft 113. The HPC rotor 106 is connected to and driven by the HPT rotor 107 through a high speed shaft 114. The engine shafts 112-114 are rotatably supported by a plurality of bearings 116; e.g., rolling element and/or thrust bearings. Each of these bearings 116 is connected to the engine housing 98 by at least one stationary structure such as, for example, an annular support frame.

During operation, air enters the turbine engine 84 through the airflow inlet 88. This air is directed through the fan section 92 and into a core flowpath 118 and a bypass flowpath 120. The core flowpath 118 extends sequentially through the engine sections 93A-95B. This core flowpath 118 may also include the inner flowpath 32 where the heat exchange apparatus 22 (see FIG. 1) forms, for example, an outer sidewall (or an inner sidewall) of the combustor 78. The air within the core flowpath 118 may be referred to as core air. The bypass flowpath 120 extends through a bypass duct, which bypasses the engine core. The air within the bypass flowpath 120 may be referred to as bypass air.

The core air is compressed by the LPC rotor 105 and the HPC rotor 106 and directed into the combustion chamber 80. Fuel is injected into the combustion chamber 80 and mixed with the compressed core air to provide a fuel-air mixture. This fuel-air mixture is ignited and combustion products thereof flow through and sequentially cause the HPT rotor 107 and the LPT rotor 108 to rotate. The rotation of the HPT rotor 107 and the LPT rotor 108 respectively drive rotation of the HPC rotor 106 and the LPC rotor 105 and, thus, compression of the air received from a core airflow inlet. The rotation of the LPC rotor 105 also drives rotation of the fan rotor 104, which propels the bypass air through and out of the bypass flowpath 120. The propulsion of the bypass air may account for a majority of thrust generated by the turbine engine 84, e.g., more than seventy-five percent (75%) of engine thrust. The turbine engine of the present disclosure, however, is not limited to the foregoing exemplary thrust ratio.

While the combustor 78 is generally described above as facilitating continuous deflagration of the fuel-air mixture, the present disclosure is not limited to such an exemplary type of combustion. For example, the combustor 78 may alternatively facilitate periodic (e.g., pulse or rotating) detonation of the fuel-air mixture.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly (20) for an engine, comprising:
a heat exchange apparatus (22) including a core (28), a shell (30) and an inner flowpath (32);
the core (28) including a core sidewall (34) and a plurality of internal passages (36), the core sidewall (34) extending axially along and circumferentially around an axis (38), the core sidewall (34) extending radially from a core inner side (40) to a core outer side (42), the core inner side (40) forming an outer peripheral boundary of the inner flowpath (32), the plurality of internal passages (36) arranged circumferentially about the axis (38), and each of the plurality of internal passages (36) extending axially in the core sidewall (34); and
the shell (30) extending axially along and circumscribing the core (28), and the shell (30) abutted radially against the core outer side (42).

2. The assembly (20) of claim 1, wherein
the core (28) has a first microstructure; and
the shell (30) has a second microstructure that is different than the first microstructure.

3. The assembly (20) of claim 2, wherein
the core (28) is formed using an additive manufacturing process providing the core (28) with the first microstructure; and
the shell (30) is formed using a forging process providing the shell (30) with the second microstructure.

4. The assembly (20) of claim 1, 2 or 3, wherein the core (28) is configured to transfer heat energy between a first fluid flowing in the inner flowpath (32) and a second fluid flowing in the plurality of internal passages (36).

5. The assembly (20) of any preceding claim, further comprising a compressor section (93) fluidly coupled with and upstream of the inner flowpath (32).

6. The assembly (20) of any preceding claim, further comprising a fluid source (74) fluidly coupled with and upstream of the plurality of internal passages (36).

7. The assembly (20) of claim 6, further comprising a second fluid source (76) fluidly coupled with and upstream of the plurality of internal passages (36), the second fluid source (76) configured to contain a quantity of a/the second fluid as a liquid.

8. The assembly (20) of any preceding claim, wherein the inner flowpath (32) is fluidly discrete from the plurality of internal passages (36).

9. The assembly (20) of any preceding claim, further comprising a combustor (78) comprising the heat exchange apparatus (22), wherein the inner flowpath (32) is configured as a combustion chamber (80) within the combustor (78).

10. The assembly (20) of any preceding claim, wherein
the plurality of internal passages (36) include a first passage (36) and a second passage (36); and
the first passage (36) is circumferentially adjacent and radially aligned with the second passage (36), or the first passage (36) is radially adjacent and circumferentially aligned with the second passage (36).

11. The assembly (20) of any of claims 1 to 9, wherein
the plurality of internal passages (36) include a first passage (36), a second passage (36) and a third passage (36);
the first passage (36) is circumferentially adjacent and radially aligned with the second passage (36); and
the third passage (36) is radially offset from the first passage (36) and the second passage (36B), and the third passage (36) is circumferentially aligned with a wall between the first passage (36) and the second passage (36).

12. The assembly (20) of any preceding claim, wherein
the plurality of internal passages (36) include a/the first passage (36) and a/the second passage (36); and
the first passage and the second passage (36) are fluidly coupled in parallel between an inlet (58) into the heat exchange apparatus (22) and an outlet (60) from the heat exchange apparatus (22).

13. The assembly (20) of any of claims 1 to 11, wherein
the plurality of internal passages (36) include a/the first passage (36) and a/the second passage (36); and
the first passage and the second passage (36) are fluidly coupled in series between an inlet (58) into the heat exchange apparatus (22) and an outlet (60) from the heat exchange apparatus (22).

14. The assembly (20) of any preceding claim, wherein
the plurality of internal passages comprise a/the first passage (36); and
the first passage (36) has an elongated cross-sectional geometry or a triangular cross-sectional geometry when viewed in a reference plane perpendicular to the axis (38).

15. The assembly (20) of any preceding claim, wherein the plurality of internal passages include a/the first passage (36) and a/the second passage (36), and the core (28) comprises an uninterrupted, straight-line load path (56) radially from the core inner side (40) to the core outer side (42), and the uninterrupted, straight-line load path (56) is axially aligned with and circumferentially between the first passage (36) and the second passage (36), and/or
wherein the core inner side (40) has a radius that is at least ten times greater than a radial thickness (41) of the core sidewall (34).
